# EUROPÄISCHE PATENTSCHRIFT

(11) **EP 2 917 757 B1**
(45) Veröffentlichungstag und Bekanntmachung des Hinweises auf die Patenterteilung: **25.07.2018**
(21) Anmeldenummer: 13766263.1
(22) Anmeldetag: 18.09.2013
(51) Int. Cl.: G01S 7/487

(54) **OPTOELEKTRONISCHE DETEKTIONSEINRICHTUNG MIT EINSTELLBARER BIASSPANNUNG EINES AVALANCHE-PHOTODETEKTORS FÜR EIN KRAFTFAHRZEUG, KRAFTFAHRZEUG UND ENTSPRECHENDES VERFAHREN**
OPTOELECTRONIC DETECTION DEVICE WITH ADJUSTABLE BIAS VOLTAGE OF AN AVALANCHE-PHOTODETECTOR FOR A MOTOR VEHICLE, MOTOR VEHICLE AND CORRESPONDING METHOD
DISPOSITIF DE DÉTECTION OPTOÉLECTRONIQUE À TENSION DE POLARISATION AJUSTABLE D'UN PHOTODÉTECTEUR À AVALANCHE DESTINÉ À UN VÉHICULE AUTOMOBILE, VÉHICULE AUTOMOBILE ET PROCÉDÉ AFFÉRENT

(30) Priorität: 08.11.2012 DE 102012021830
(43) Veröffentlichungstag der Anmeldung: 16.09.2015
(73) Patentinhaber: Valeo Schalter und Sensoren GmbH, 74321 Bietigheim-Bissingen (DE)
(72) Erfinder: KOEHLER, Michael, 22527 Hamburg (DE); BERGER, Patrick, 21244 Buchholz (DE)
(86) Internationale Anmeldenummer: PCT/EP2013/069378
(87) Internationale Veröffentlichungsnummer: WO 2014/072106

(56) Entgegenhaltungen:
- EP-A2- 1 903 302
- WO-A1-98/16801
- DE-A1- 2 245 508
- US-A- 4 077 718
- US-A1- 2005 248 749
- US-B1- 6 650 404

## Beschreibung

Die Erfindung betrifft eine optoelektronische Detektionseinrichtung, insbesondere einen Laserscanner, für ein Kraftfahrzeug, mit einem optischen Sender zum Aussenden elektromagnetischer Strahlen, mit einem Avalanche-Photodetektor zum Empfangen von an einem Zielobjekt in einer Umgebung des Kraftfahrzeugs reflektierten Strahlen und zum Bereitstellen eines elektrischen Empfangssignals abhängig von den empfangenen Strahlen, mit einer elektronischen Auswerteeinrichtung zum Detektieren des Zielobjekts abhängig von dem elektrischen Empfangssignal, und mit einer Steuereinrichtung, welche eine elektrische Biasspannung des Avalanche-Photodetektors im Betrieb einstellt. Die Erfindung betrifft außerdem ein Kraftfahrzeug mit einer solchen Detektionseinrichtung, wie auch ein entsprechendes Verfahren.

Unterschiedlichste Fahrerassistenzsysteme zur Detektion von Objekten werden zunehmend im Automobilbereich eingesetzt, um den Fahrer beim Führen seines Kraftfahrzeugs zu unterstützen. Laser-basierte Systeme (auch unter der Bezeichnung "Lidar" bzw. "Light Detection and Ranging" bekannt) ermöglichen dabei die Erkennung von Objekten in einer relativ großen Reichweite bis über 100 m vom Fahrzeug mit einer sehr hohen Messgenauigkeit. Sie werden bevorzugt im vorderen Bereich des Fahrzeugs platziert, beispielsweise hinter der Windschutzscheibe oder aber am Kühlergrill, um u.a. die Zeit bis zum Aufprall (time to collision, TTC) zu ermitteln. Solche Systeme können aber auch in seitigen oder rückwärtigen Bereichen des Fahrzeugs platziert werden, um insbesondere den Totwinkel bzw rückwärtigen Verkehr zu überwachen.

Ein Laserscanner arbeitet nach dem Lichtlaufzeitprinzip und beinhaltet typischerweise einen optischen Sender, welcher kurze Laserimpulse aussendet, die über einen schwenkbaren Spiegel so abgelenkt werden, dass eine Abtastung des gesamten Sichtfelds innerhalb eines vorbestimmten Abtastwinkelbereiches stattfindet. Pro Abtastwinkel bzw. pro Winkelschritt wird dabei ein Laserimpuls ausgesendet. Im selben Winkelschritt, ohne dass der Spiegel nennenswert bewegt wird, werden die reflektierten Strahlen mittels eines Empfängers empfangen, und es wird ein elektrisches Empfangssignal bereitgestellt. Dieses elektrische Empfangssignal wird analysiert. Werden Echos bzw. Pulse im Empfangssignal erkannt, so sind diese grundsätzlich auf Reflektionen des ausgesendeten Laserimpulses an Zielobjekten in der Umgebung zurückzuführen. Die Zeitdauer zwischen dem Aussenden des Laserimpulses und dem Empfangen des Echos ist proportional zur Distanz zum Objekt. Diese Laufzeit wird gemessen und als Ergebnis der Entfernungsmessung für diesen Winkelschritt abgelegt.

Ein Laserscanner für Kraftfahrzeuge ist beispielsweise aus dem Dokument DE 10 2010 047 984 A1 bekannt. Der abtastende optische Entfernungssensor umfasst einen Laser als optischen Sender, mindestens einen Detektor als optischen Empfänger sowie eine Umlenkeinheit, welche mit einem ersten Spiegel eine Laserstrahlung auf die zu vermessende Szene umlenkt und mit einem zweiten Spiegel die von Objekten zurück gestreuten Laserimpulse auf den mindestens einen Detektor umlenkt. Der erste und der zweite Spiegel sind auf einer gemeinsamen drehbaren Achse angeordnet, welche von einer Antriebseinheit angetrieben wird.

In der DE 2 245 508 ist ein Verfahren zur Arbeitspunktregelung von Halbleiter-Avalanche-Fotodioden offenbart, das eine gemessene mittlere Rauschleistung der Avalanche-Fotodiode als Regelgröße verwendet.

Im Patent US 4,077,718 wird ein Empfänger für ein Lidar beschrieben, der eine Frequenz von Störimpulsen, die von einer Avalanche-Diode herrühren, regelt.

Die WO 98/16801 A1 beschreibt einen optischen Sensor für Fahrzeuge mit einem rotierenden Spiegelsystem.

In der EP 1 903 302 A2 ist ein Entfernungsmesser offenbart, der zum Aussenden eines amplitudenmodulierten optischen Messstrahles eingerichtet ist.

In der US 2005/0248749 A1 sind ein Verfahren und eine Vorrichtung zum Messen von Entfernungen offenbart. Gemäß dem Verfahren werden zwei unterschiedliche Schwellwerte zum Detektieren von Objekten verwendet.

Im Patent US 6,650,404 B1 ist ein Empfänger für einen Laserentfernungsmesser offenbart.

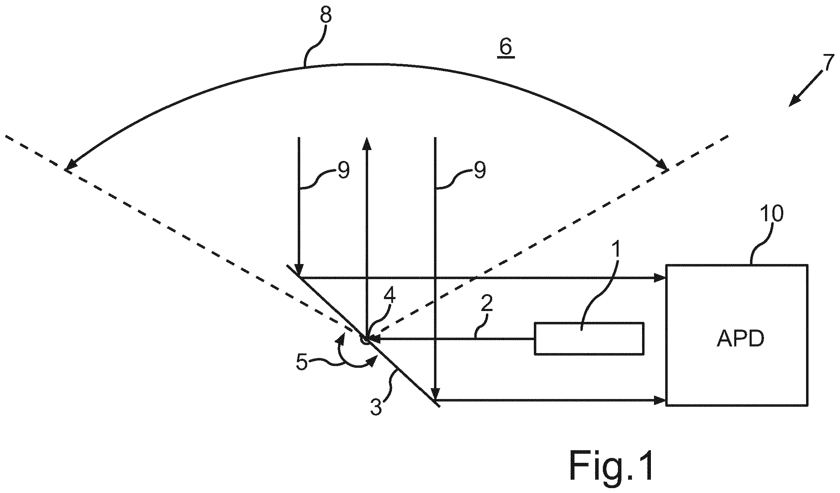

Ein beispielhafter Laserscanner ist in schematischer und abstrakter Darstellung auch in Fig. 1 dargestellt. Der Laserscanner hat einen optischen Sender, welcher eine Lichtquelle 1, insbesondere Laserquelle, zum Aussenden von Strahlen 2 sowie einen verschwenkbaren Spiegel 3 umfasst. Der Spiegel 3 kann um eine Schwenkachse 4 gemäß der Pfeildarstellung 5 verschwenkt werden, um die Strahlen 2 umzulenken. Ein Sichtfeld 6 der insgesamt mit 7 bezeichneten Detektionseinrichtung ist durch einen Abtastwinkelbereich 8, insbesondere in Azimutrichtung, definiert. Innerhalb dieses Abtastwinkelbereiches 8 wird das Sichtfeld 6 mit der Detektionseinrichtung 7 abgetastet, wobei für eine Vielzahl von unterschiedlichen Abtastwinkeln innerhalb des Abtastwinkelbereiches 8 schrittweise jeweils ein Strahlimpuls ausgesendet wird. Werden die Strahlen 2 reflektiert, so empfängt die Detektionseinrichtung 7 reflektierte Strahlen 9, welche - z.B. durch denselben Spiegel 3 - auf einen Photodetektor bzw. Empfänger 10 umgelenkt werden. Ausführungsformen ohne Umlenkung der reflektierten Strahlen 9 oder mit einem separaten Spiegel sind ebenfalls möglich.

Zwischen zwei benachbarten Abtastwinkeln und somit zwischen zwei zeitlich benachbarten Schüssen liegt eine Zeitspanne, die von der Scanfrequenz und der Winkelauflösung abhängt. Diese Zeitspanne ist deutlich größer als die Laufzeit vom Aussenden des Pulses bis zur Rückkehr eines Empfangspulses in der maximalen Messentfernung, welche üblicherweise zwischen 200 und 400 m liegt. Bei einer Scanfrequenz von beispielsweise 25 Hz und einer Winkelauflösung von 0,25° liegen zwischen zwei Schüssen und somit zwischen der Schrittbewegung des Spiegels 3 insgesamt 27 µs. Eine Entfernung von beispielsweise 327 m entspricht einer Laufzeit des Lichts von lediglich ca. 2,2 µs, so dass zwischen dem Abschluss der Messung auf einem Winkelschritt und dem Beginn der nächsten Messung auf dem nächsten Winkelschritt eine Zeitspanne von ca. 23 µs verbleibt.

Je nach Abstand und Reflexionseigenschaften des Objektes kann die Leistung des Empfangssignals sehr klein sein. Aus diesem Grund werden im Empfänger üblicherweise sogenannte Avalanche-Photodetektoren eingesetzt, die eine hohe Verstärkung des optischen Signals gewährleisten. Ein solcher Detektor muss zum Generieren der Verstärkung über den optischen Lawineneffekt mit einer relativ hohen elektrischen Biasspannung vorgespannt werden. Der Verstärkungsfaktor des Detektors ist dabei sowohl von der angelegten Biasspannung als auch von der Temperatur des Detektors selbst abhängig. Die Einstellung eines konstanten Verstärkungsfaktors über alle Temperaturwerte erfordert demnach eine Nachstellung der Biasspannung über die Temperatur.

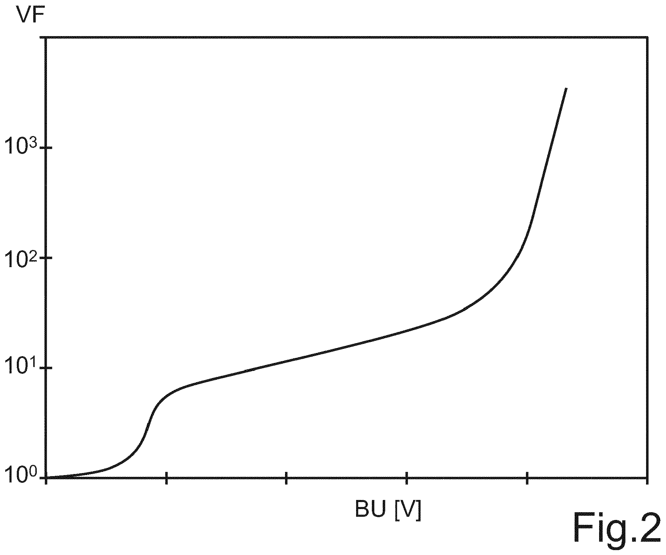

Die Einstellung der Biasspannung und somit des Verstärkungsfaktors stellt eine Herausforderung dar: Einerseits soll eine ausreichend hohe bzw. möglichst hohe Verstärkung des Empfängers gewährleistet werden. Andererseits darf die Verstärkung jedoch nicht so groß gewählt werden, dass der Detektor ins Rauschen fällt und das Rauschen nicht mehr von einem Nutzsignal unterschieden werden kann. In Fig. 2 ist dabei die Abhängigkeit des Verstärkungsfaktors VF von der angelegten Biasspannung BU für eine exemplarische konstante Temperatur dargestellt. Erkennbar ist, dass bei relativ hohen Werten der Biasspannung BU der Kurvenverlauf immer steiler wird; man beachte auch die logarithmische Skalierung der y-Achse. Erhöht man den Verstärkungsfaktor sehr stark, fällt der Detektor ins Rauschen, d.h. es werden elektrische Ausgangssignale erzeugt, ohne dass optische Eingangsimpulse vorliegen müssen. Ein derartiger Zustand ist zu vermeiden, da dies zu Fehlmessungen bzw. zur Detektion von Fehlzielen führen kann, die tatsächlich nicht existieren. Der Übergangspunkt, bei welchem ein Avalanche-Photodetektor ins Rauschen fällt, ist dabei stark von der Gleichlichtbelastung (Stärke des einfallenden Lichts, wie zum Beispiel Umgebungslichts) abhängig, der der Detektor ausgesetzt ist. So beginnt ein Detektor bei hoher Gleichlichtbelastung - beispielsweise bei direkter Bestrahlung mit Sonnenlicht - deutlich früher und somit bei kleineren Biasspannungen ins Rauschen zu fallen als beim Betrieb in einer dunklen Umgebung.

Die Einstellung der Biasspannung erfolgt im Stand der Technik typischerweise mittels einer Steuerkurve, die bei jeder Temperatur einen konstanten Verstärkungsfaktor erzeugt. Dies bedeutet, dass der Verstärkungsfaktor stets auf einen konstanten Sollwert eingestellt wird, wobei die Biasspannung abhängig von der Temperatur so verändert wird, dass der Verstärkungsfaktor konstant ist. Um für unterschiedliche Gleichlichtbelastungen, die im Betrieb der Detektionseinrichtung auftreten können, sicherzustellen, dass der Detektor nicht ins Rauschen fällt, wird die Steuerkurve oft für den ungünstigsten Fall der möglichen Gleichlichtbelastungen gewählt, so dass über einen großen Bereich auftretende Gleichlichtbelastungen ein rauschfreier Betrieb gewährleistet ist.

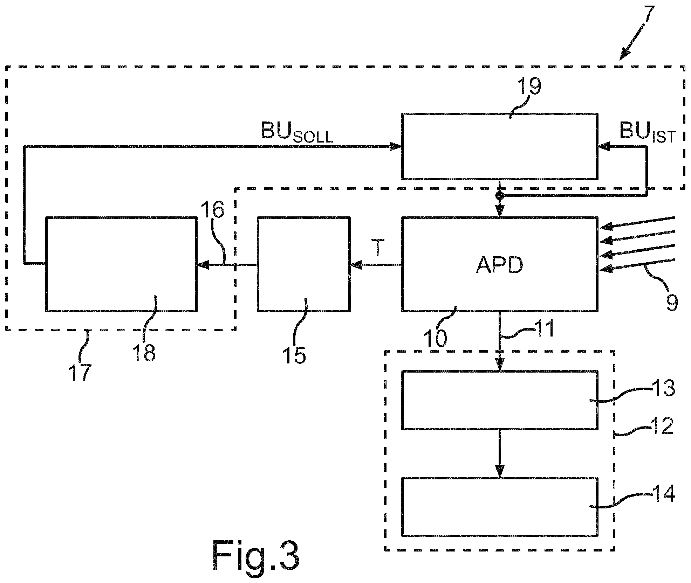

In Fig. 3 ist dabei ein Blockschaltbild einer typischen Detektionseinrichtung 7 dargestellt. Der Photodetektor 10 empfängt die reflektierten Strahlen 9 und erzeugt ein elektrisches Empfangssignal 11. Das Empfangssignal 11 wird einer elektronischen Auswerteeinrichtung 12 zugeführt, welche anhand des Empfangssignals 11 in einem ersten Block 13 eine Entfernungsmessung durchführt. In einem weiteren Block 14 erfolgt dann eine Objektauswertung, indem ein detektiertes Objekt beispielsweise klassifiziert und/oder verfolgt wird. Mit Hilfe eines Temperatursensors 15 wird die aktuelle Temperatur T des Detektors 10 gemessen, und es wird ein digitales Sensorsignal 16 an eine Steuereinrichtung 17 abgegeben, welches die aktuelle Temperatur T charakterisiert. Anhand einer abgelegten Steuerkurve wird in einem Block 18 anhand des Ist-Werts der Temperatur T ein Sollwert BU_{SOLL} der Biasspannung bestimmt und einem Regler 19 zugeführt. Der Regler 19 erfasst auch den aktuellen Wert BU_{IST} der Biasspannung und regelt die Biasspannung des Detektors 10 auf den Sollwert BU_{SOLL}.

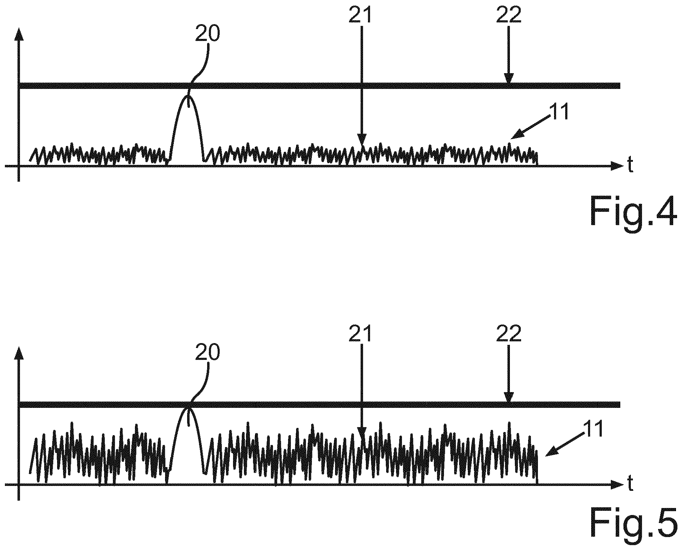

Die Festlegung der Steuerkurve für den ungünstigsten Fall sorgt dafür, dass die Detektionseinrichtung 7 unter einer Vielzahl von Bedingungen grundsätzlich unempfindlicher ist, als sie theoretisch sein könnte. Der Verstärkungsfaktor des Detektors 10 ist nämlich häufig geringer als möglich, so dass auch die Detektionsreichweite der Einrichtung 7 geringer als bei einer optimalen Einstellung des Verstärkungsfaktors ist. Dies ist in den Fig. 4 und 5 veranschaulicht, in denen jeweils das elektrische Empfangssignal 11 bzw. seine Höhe über der Zeit t dargestellt ist. In beiden Fällen hat das Empfangssignal 11 ein Zielecho 20, welches sich vom Rauschen 21 erhebt. In Fig. 4 ist dabei der Verlauf des Signals 11 für eine normale Gleichlichtbelastung gezeigt, während in Fig. 5 ein Szenario dargestellt ist, bei welchem eine relativ hohe Gleichlichtbelastung gegeben ist. In beiden Fällen wird die Biasspannung BU abhängig von der Temperatur T eingestellt, wie in Fig. 3 gezeigt. In den Fig. 4 und 5 ist mit 22 eine Schwelle bezeichnet, mit welcher die Höhe des Empfangssignals 11 verglichen wird. Wird eine Überschreitung der Schwelle 22 erkannt, liegt eine Detektion vor. Dies bedeutet, dass für Empfangsechos 20, die diese Schwelle 22 überschreiten, eine Detektion im Sinne einer Entfernungsmessung stattfindet. Die Darstellung gemäß den Fig. 4 und 5 verdeutlicht, dass die Schwelle 22 so hoch gewählt ist, dass in Umgebungsbedingungen mit hoher Gleichlichtbelastung (Fig. 5) keine Durchtritte des Rauschens 21 durch die Schwelle 22 stattfinden. Auf diese Weise werden Falschmessungen weitestgehend vermieden bzw. es wird verhindert, dass fiktive Zielobjekte angezeigt werden, die tatsächlich nicht vorhanden sind. Die Darstellung gemäß Fig. 4 zeigt im Umkehrschluss, dass unter Bedingungen mit einer moderaten Gleichlichtbelastung Objektreflexionen nicht detektiert werden können, obwohl sie deutlich oberhalb des Rauschpegels liegen. Speziell unter Umgebungsbedingungen wie Regen, Gischt, Nebel und dergleichen ist die Gleichlichtbelastung, die im Wesentlichen durch die Wetterbedingungen und Tageszeit vorgegeben wird, besonders gering. Entsprechend wäre eine höhere Verstärkung bzw. Biasspannung und verbesserte Reichweite möglich.

Die Einstellung der Biasspannung abhängig von der Temperatur hat außerdem den Nachteil, dass die Steuerkurve bei jeder einzelnen Photodiode fertigungsspezifisch unterschiedlich ist. Um geeignete Steuerkurven zu hinterlegen, muss jede Photodiode nach der Fertigung vermessen werden, um eine solche Kurve ermitteln zu können. Zudem muss für jedes Gerät im Fertigungsprozess eine solche Kurve im Gerät hinterlegt werden, was zu einer gerätespezifischen Parametrierung führt. Beides erhöht die Kosten des Herstellungsprozesses.

Es ist Aufgabe der Erfindung, eine Lösung aufzuzeigen, wie bei einer Detektionseinrichtung der eingangs genannten Gattung die Biasspannung des Avalanche-Photodetektors derart im Betrieb eingestellt werden kann, dass für verschiedenste Umgebungsszenarien, insbesondere für verschiedenste Gleichlichtbelastungen, eine im Vergleich zum Stand der Technik verbesserte Empfindlichkeit der Detektionseinrichtung ermöglicht werden kann, ohne dass der Photodetektor selbst ins Rauschen fällt.

Diese Aufgabe wird erfindungsgemäß durch eine Detektionseinrichtung, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße optoelektronische Detektionseinrichtung, insbesondere ein Laserscanner, für ein Kraftfahrzeug ist zur Detektion eines Zielobjektes in der Umgebung des Kraftfahrzeugs ausgebildet. Die Detektionseinrichtung umfasst einen optischen Sender zum Aussenden elektromagnetischer Strahlen. Sie umfasst auch einen Avalanche-Photodetektor zum Empfangen von in der Umgebung reflektierten Strahlen und zum Bereitstellen eines elektrischen Empfangssignals abhängig von den empfangenen Strahlen. Eine Auswerteeinrichtung detektiert das Zielobjekt abhängig von dem elektrischen Empfangssignal. Eine Steuereinrichtung stellt eine elektrische Biasspannung des Avalanche-Photodetektors im Betrieb der Detektionseinrichtung ein, um den Detektor elektrisch vorzuspannen. Die Detektionseinrichtung umfasst eine Messeinrichtung, welche zum Erfassen des Werts eines Rauschens des elektrischen Empfangssignals ausgebildet ist. Die Steuereinrichtung ist dazu ausgelegt, die Biasspannung des Avalanche-Photodetektors in Abhängigkeit von dem Wert des Rauschens einzustellen.

Durch Erfassung des Rauschpegels des elektrischen Empfangssignals sowie durch Einstellung der Biasspannung in Abhängigkeit von dem Rauschpegel wird erreicht, dass der Verstärkungsfaktor des Photodetektors und somit die Empfindlichkeit der Detektionseinrichtung situationsabhängig und bedarfsgerecht eingestellt werden kann, so dass für unterschiedliche Umgebungsbedingungen jeweils der optimale Verstärkungsfaktor bzw. jeweils die maximal mögliche Empfindlichkeit eingestellt werden können, ohne dass der Detektor ins Rauschen fällt. Die Biasspannung kann nämlich stets so eingestellt werden, dass der Rauschpegel einerseits unterhalb der Detektionsschwelle bleibt und andererseits auch Zielechos mit einer relativ geringen Energie detektiert werden können. Weil der Rauschpegel auch von der Gleichlichtbelastung des Detektors abhängt, wird durch Erfassung des Rauschens gleichzeitig auch die aktuelle Gleichlichtbelastung bei der Einstellung der Biasspannung berücksichtigt bzw. diese fließt in die Einstellung der Biasspannung mit ein.

Es erübrigt sich auch die Ermittlung einer entsprechenden temperaturabhängigen Steuerkurve mit den damit verbundenen Nachteilen. Es brauchen keine Steuerkurven hinterlegt zu werden und die Detektoren müssen auch nicht in aufwendiger Weise individuell nach der Fertigung vermessen werden. Es entfällt auch eine gerätespezifische Parametrierung.

Der Avalanche-Photodetektor kann mindestens ein Avalanche-Photoelement umfassen, nämlich insbesondere mindestens eine Avalanche-Photodiode und/oder mindestens einen Avalanche-Phototransistor.

In einer bevorzugten Ausführungsform ist vorgesehen, dass die Steuereinrichtung einen Regler umfasst und dazu ausgelegt ist, durch Einstellung der Biasspannung den Wert des Rauschens auf einen vorgebbaren Soll-Wert zu regeln. Dies bedeutet, dass die Biasspannung derart geregelt wird, dass die Höhe des Rauschens konstant bleibt. Die Biasspannung wird demnach in einem geschlossenen Regelkreis derart nachgeführt, dass der Rauschpegel unter allen Bedingungen, wie beispielsweise bei verschiedenen Gleichlichtbelastungen und/oder bei unterschiedlichen Temperaturwerten, konstant bleibt. Damit weist die Detektionseinrichtung eine unter allen Umgebungsbedingungen maximal mögliche Empfindlichkeit auf.

Die Detektion eines Zielobjekts erfolgt vorzugsweise derart, dass das elektrische Empfangssignal mit einer vorgegebenen Schwelle verglichen wird. Das Zielobjekt wird dann abhängig von diesem Vergleich detektiert. Insbesondere wird ein Zielecho des Empfangssignals dann als zu einem realen, tatsächlichen Zielobjekt gehörend interpretiert, wenn dieses Zielecho die vorgegebene Schwelle überschreitet. Die Steuereinrichtung kann dazu ausgelegt sein, durch entsprechende Einstellung der Biasspannung den Wert des Rauschens auf einen Soll-Wert einzustellen, der geringer als die vorgegebene Schwelle ist. Die Soll-Höhe des Rauschpegels wird also vorzugsweise derart gewählt, dass das Rauschen stets unterhalb der Detektionsschwelle liegt, welche für die Erkennung des Nutzsignals verwendet wird. Vorzugsweise liegt der Soll-Wert des Rauschpegels gerade noch unterhalb der Detektionsschwelle. Auf diese Art und Weise arbeitet die Detektionseinrichtung bei allen Umgebungsbedingungen mit der maximal möglichen Empfindlichkeit und somit auch bei der maximal möglichen Reichweite. Es erübrigt sich somit die Ermittlung und Parametrierung von gerätespezifischen Steuerkurven mit den damit verbundenen Nachteilen hinsichtlich der Kosten und der benötigten Zeit.

Die Auswertung des elektrischen Empfangssignals in der Auswerteeinrichtung kann (insbesondere für jeden Abtastwinkel der Detektionseinrichtung) so aussehen, dass innerhalb eines ersten Zeitintervalls nach Aussenden eines Strahls (insbesondere eines Laserimpulses) durch den Sender das elektrische Empfangssignal mit einer für eine Nahbereichsmessung vorgesehenen ersten Schwelle verglichen wird und innerhalb eines auf das erste Zeitintervall folgenden zweiten Zeitintervalls das elektrische Empfangssignal mit einer für eine Fernbereichsmessung vorgesehenen zweiten Schwelle verglichen wird. Der Schwellwert der ersten Schwelle (Nahbereichsmessung) innerhalb des ersten Zeitintervalls ist vorzugsweise höher als der Schwellwert der zweiten Schwelle (Fernbereichsmessung) innerhalb des zweiten Zeitintervalls. Durch eine solche Differenzierung zwischen Nahbereich und Fernbereich gelingt es, fiktive Zielechos auszublenden, welche aufgrund von Reflexionen der Strahlen an unerwünschten Objekten wie Regen und/oder Nebel und/oder Gischt und/oder Abgas und/oder Schmutz durch die Detektionseinrichtung empfangen werden. Solche fiktive Objekte liegen nämlich typischerweise im Nahbereich, so dass sie durch entsprechende Wahl der ersten Schwelle ausgeblendet werden können.

Vorzugsweise stellt die Steuereinrichtung durch entsprechende Wahl der Biasspannung den Wert des Rauschens auf einen Soll-Wert ein, der geringer als die für die Fernbereichmessung vorgesehene zweite Schwelle ist. Die Regelung des Rauschpegels kann also derart erfolgen, dass dieser Pegel stets unterhalb der zweiten Schwelle liegt, welche für die Fernbereichsmessung vorgesehen ist. Dadurch wird ein Überschreiten der beiden Schwellen durch das Rauschen des Empfangssignals verhindert.

Grundsätzlich kann die Messung des Rauschpegels auf eine beliebige Art und Weise erfolgen. Beispielsweise kann das Empfangssignal mittels eines Analog-Digital-Konverters in ein digitales Empfangssignal umgewandelt werden, und die Rauschmessung kann anhand des digitalen Empfangssignals erfolgen. Hierbei wird der Rauschpegel beispielsweise mittels eines digitalen Signalprozessors bestimmt.

In einer Ausführungsform ist vorgesehen, dass die Messeinrichtung zur Erfassung des Rauschpegels dazu ausgelegt ist, den Rauschpegel mittels einer der beiden Schwellen zu erfassen, insbesondere anhand des analogen elektrischen Empfangssignals und mithilfe eines analogen Komparators. Zu diesem Zwecke wird eine der Schwellen, insbesondere die für den Nahbereich vorgesehen erste Schwelle, abgesenkt, und der Rauschpegel wird durch Absenken dieser Schwelle erfasst. Das Absenken der ersten Schwelle hat den Vorteil, dass das zweite Zeitintervall für die Fernbereichsmessung dazu genutzt werden kann, um die erste Schwelle, die im zweiten Zeitintervall nicht genutzt wird, abzusenken, um dann nach Ablauf des zweiten Zeitintervalls den Rauschpegel mit dieser ersten Schwelle erfassen zu können. Zur Ermittlung des Rauschmesswertes wird die Schwelle vorzugsweise auf einen Wert reduziert, der unterhalb des Schwellwerts der zweiten Schwelle im zweiten Zeitintervall liegt. Der Ist-Rauschwert ergibt sich dann vorzugsweise als Kennzahl, die aus Anzahl und Dauer der Durchtritte des Empfangssignals durch die abgesenkte Schwelle innerhalb einer vorgegebenen Zeitspanne bestimmt wird.

Die Rauschmessung erfolgt somit vorzugsweise basierend auf der gleichen analogen Messtechnik wie die der Objekterfassung, nämlich mittels der Schwelle. Es wird folglich keine zusätzliche Hardware benötigt, und es kann der bereits vorhandene analoge Komparator verwendet werden. Die Ermittlung des aktuellen Rauschpegels mittels der Schwelle bzw. mit Hilfe des Komparators ermöglicht es auch, frühzeitig sich erhöhendes Rauschen bzw. sich verändernde Gleichlichtbelastung zu erkennen und die Biasspannung entsprechend nachzuführen.

Vorzugsweise wird der Rauschpegel innerhalb eines auf das zweite Zeitintervall, insbesondere unmittelbar, folgenden dritten Zeitintervalls bei Messung bei einem bestimmten Abtastwinkel erfasst. Die Erfassung des Rauschpegels erfolgt insbesondere, noch bevor ein weiterer Strahl durch den Sender - insbesondere für einen weiteren Abtastwinkel - ausgesendet wird. Bevorzugt erfolgt die Rauschmessung auch nach jedem Sendeereignis bzw. nach jedem Aussenden eines Strahls durch den Sender. Durch die Erfassung des Rauschpegels innerhalb des dritten Zeitintervalls wird ermöglicht, dass die für den Nahbereich vorgesehene erste Schwelle rechtzeitig während des zweiten Zeitintervalls abgesenkt werden kann. Auch ein relativ langsames Nachführen bzw. Absenken der ersten Schwelle reicht somit für die Erfassung des Rauschpegels aus.

Wie bereits ausgeführt, ist die optoelektronische Detektionseinrichtung bevorzugt ein Scanner, insbesondere ein Laserscanner. Der Sender ist in einer Ausführungsform dazu ausgebildet, ein Sichtfeld der Detektionseinrichtung, insbesondere in Azimutrichtung bzw. in horizontaler Richtung, innerhalb eines Abtastwinkelbereiches abzutasten und hierbei für eine Vielzahl von unterschiedlichen Abtastwinkeln innerhalb des Abtastwinkelbereiches jeweils einen Sendestrahl, insbesondere einen Laserimpuls, auszusenden. Mit einem solchen Scanner kann ein relativ breiter, insbesondere azimutaler, Erfassungswinkel und somit ein relativ breiter Erfassungsbereich bzw. breites Sichtfeld mit hoher Auflösung überwacht werden.

Die Messung des Rauschpegels erfolgt dabei vorzugsweise zwischen jeweils zeitlich unmittelbar benachbarten Sendeereignissen und somit bevorzugt auch in jeder Ausrichtung des Senders bzw. in jeder Stellung des Spiegels.

Es erweist sich als besonders vorteilhaft, wenn die Steuereinrichtung für zumindest zwei unterschiedliche Teilwinkelbereiche des gesamten Abtastwinkelbereiches die Biasspannung individuell einstellt. Die Einstellung der Biasspannung erfolgt somit nicht für den gesamten Abtastwinkelbereich bzw. das gesamte Sichtfeld des Senders, sondern es wird stattdessen eine lokale bzw. individuelle und spezifische Einstellung für unterschiedliche Teilwinkelbereiche unabhängig voneinander vorgenommen. Auf diese Art und Weise gelingt es, auch bei unterschiedlichen Gleichlichtbelastungen innerhalb der jeweiligen Teilwinkelbereiche jeweils die optimale Empfindlichkeit der Detektionseinrichtung einzustellen. Typischerweise erzeugen nämlich entgegenkommende Fahrzeuge mit eingeschalteten Scheinwerfern nur in einem engen Winkelbereich eine erhöhte Gleichlichtbelastung, während in anderen Teilwinkelbereichen eine geringere Gleichlichtbelastung gegeben ist. Die unabhängige Einstellung der Biasspannung für unterschiedliche Winkelsektoren sorgt dafür, dass eine lokale Erhöhung des Rauschens im Scanbereich nicht die Empfindlichkeit bzw. Reichweite im gesamten Abtastbereich beeinflusst.

Bevorzugt wird der Rauschpegel für die zumindest zwei unterschiedlichen Teilwinkelbereiche individuell erfasst, wobei für die zumindest zwei unterschiedlichen Teilwinkelbereiche auch jeweils unterschiedliche Soll-Werte für den jeweiligen Wert des Rauschens individuell vorgebbar sind. Die Steuereinrichtung ist bevorzugt dazu ausgelegt, durch individuelle Einstellung der Biasspannung in jedem Teilwinkelbereich den Wert des Rauschens auf den jeweils zugeordneten Soll-Wert zu regeln. Durch eine solche individuelle und winkelbereichsspezifische Regelung der Biasspannung wird in jedem Teilwinkelbereich jeweils die optimale Empfindlichkeit und Reichweite eingestellt.

Die genannten Teilwinkelbereiche können grundsätzlich beliebig groß gewählt werden. Sie können jeweils beispielsweise zwei oder mehrere Abtastwinkel des Senders umfassen. Die Anzahl der Teilwinkelbereiche liegt dabei bevorzugt in einem Wertebereich von 2 bis beispielsweise 10.

Ein erfindungsgemäßes Kraftfahrzeug umfasst eine erfindungsgemäße Detektionseinrichtung.

Die Erfindung betrifft auch ein Verfahren zum Betreiben einer optoelektronischen Detektionseinrichtung, insbesondere eines Laserscanners, eines Kraftfahrzeugs, mit den Merkmalen des unabhängigen Verfahrensanspruchs.

Die mit Bezug auf die erfindungsgemäße Detektionseinrichtung vorgestellten bevorzugten Ausführungsformen und deren Vorteile gelten entsprechend für das erfindungsgemäße Kraftfahrzeug und das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels, wie auch unter Bezugnahme auf die beigefügten Zeichnungen näher erläutert.

Es zeigen:
- Fig. 1: in schematischer und abstrakter Darstellung den prinzipiellen Aufbau einer Detektionseinrichtung gemäß einer Ausführungsform;
- Fig. 2: einen Verlauf eines Verstärkungsfaktors über der Biasspannung;
- Fig. 3: in schematischer Darstellung ein Blockschaltbild einer Detektionseinrichtung gemäß dem Stand der Technik;
- Fig. 4 und 5: beispielhafte zeitliche Verläufe eines elektrischen Empfangssignals gemäß dem Stand der Technik;
- Fig. 6: einen beispielhaften zeitlichen Verlauf eines elektrischen Empfangssignals bei einer Detektionseinrichtung gemäß einer Ausführungsform der Erfindung;
- Fig. 7: einen beispielhaften zeitliche Verlauf eines elektrischen Empfangssignals, wobei ein Verfahren gemäß einer Ausführungsform der Erfindung näher erläutert wird; und
- Fig. 8: in schematischer Darstellung ein Blockschaltbild einer Detektionseinrichtung gemäß einer Ausführungsform der Erfindung.

In den Figuren werden gleiche oder funktionsgleiche Elemente mit den gleichen Bezugszeichen versehen.

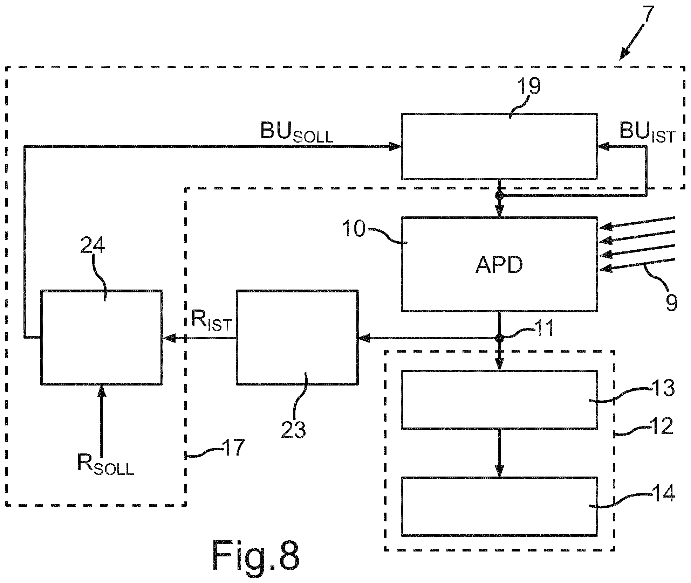

Bezug nehmend nun auf Fig. 8 beinhaltet die Detektionseinrichtung 7 einen Avalanche-Photodetektor 10, der beispielsweise eine Avalanche-Photodiode umfasst. Der Detektor 10 empfängt reflektierte Strahlen 9, insbesondere Laserimpulse. Abhängig von den Strahlen 9 erzeugt der Detektor 10 das elektrische Empfangssignal 11, welches einer elektronischen Auswerteeinrichtung 12 zugeführt wird. Diese umfasst eine Objektdetektionseinheit 13, welche z.B. einen oder mehrere analoge Komparatoren umfasst. Das elektrische Empfangssignal 11 wird mit einer Schwelle verglichen, und ein Empfangsecho wird als von einem realen Zielobjekt stammend interpretiert, falls die Höhe des Zielechos die Schwelle überschreitet. In der Einheit 13 wird außerdem die Entfernung des Zielobjektes bestimmt. In einer Objektauswertungseinheit 14 erfolgt dann eine Klassifizierung und/oder Verfolgung des Zielobjekts.

Mit dem Detektor 10 ist außerdem eine Messeinrichtung 23 gekoppelt, welche zur Erfassung des Rauschpegels des elektrischen Empfangssignals 11 dient. Zu diesem Zwecke wird der Messeinrichtung 23 das Empfangssignal 11 zugeführt. Am Ausgang gibt die Messeinrichtung 23 dann einen Ist-Wert des Rauschens R_{IST} aus, welcher einer Steuereinrichtung 17 zugeführt wird. Die Steuereinrichtung 17 dient zur Einstellung, insbesondere Regelung, der Biasspannung BU des Detektors 10. Die Steuereinrichtung 17 umfasst einen Rauschregler 24 sowie einen Regler 19 zur Regelung der Biasspannung. Der Rauschregler 24 empfängt den gemessenen Rauschpegel R_{IST} einerseits sowie einen Soll-Wert für das Rauschen R_{SOLL} andererseits. Als Regler kann beispielsweise ein PI-Regler verwendet werden.

Mittels des Rauschreglers 24 wird das Rauschen bzw. der Rauschpegel des Empfangssignals 11 in der Weise geregelt, dass der Rauschregler 24 einen Sollwert der Biasspannung BU_{SOLL} bestimmt und an den Regler 19 abgibt. Der Regler 19 empfängt also einerseits den Soll-Wert BU_{SOLL} sowie andererseits den Ist-Wert BU_{IST} der Biasspannung.

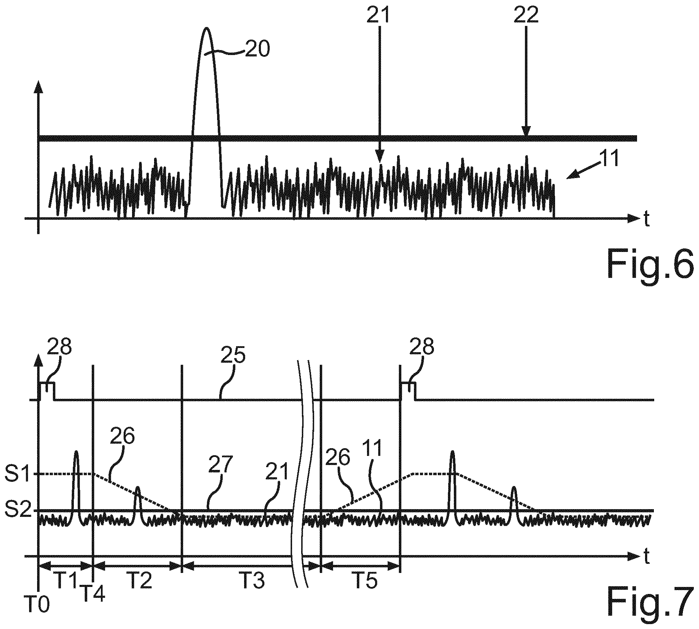

In Fig. 6 ist ein beispielhafter Verlauf eines Empfangssignals 11 über der Zeit t gemäß einer Ausführungsform der Erfindung dargestellt. Das Umgebungsszenario entspricht dem gemäß Fig. 4, so dass eine relativ geringe bzw. moderate Gleichlichtbelastung vorliegt. Während im Stand der Technik das Zielecho 20 aufgrund der geringen Verstärkung des Detektors 10 nicht detektiert wird (Fig. 4), wird die Biasspannung des Detektors 10 vorliegend derart geregelt, dass der Rauschpegel des Rauschens 21 auf einen konstanten Soll-Wert R_{SOLL} eingestellt wird. Dieser Soll-Wert R_{SOLL} liegt dabei unterhalb, insbesondere gerade noch unterhalb, der Schwelle 22, welche zur Detektion der Zielobjekte in der Einheit 13 (Fig. 8) verwendet wird. Wie aus Fig. 6 hervorgeht, kann nun das Empfangsecho 20 problemlos und zuverlässig detektiert und das Zielobjekt somit erkannt werden. Die Empfindlichkeit der Detektionseinrichtung 7 ist bei diesem Szenario somit deutlich größer als im Stand der Technik, ohne dass der Detektor 10 ins Rauschen fällt.

In Fig. 7 ist ein beispielhafter zeitlicher Verlauf des Empfangssignals 11, ein zeitlicher Verlauf eines Steuersignals 25, ein Verlauf einer ersten Schwelle 26 sowie ein Verlauf einer zweiten Schwelle 27 dargestellt. Der Sender der Detektionseinrichtung 7 wird, wie in Fig. 1 dargestellt, so betrieben, dass innerhalb des Abtastwinkelbereiches 8 verschiedenste Abtastwinkel einer nach dem anderen abgetastet werden und für jeden Abtastwinkel jeweils ein Strahlimpuls, insbesondre ein Laserimpuls, ausgesendet wird. Die Sendezeitpunkte werden mittels des Steuersignals 25 gemäß Fig. 7 vorgegeben. Zu diesem Zwecke weist das Steuersignal 25 Triggerimpulse 28 auf, wobei die beiden benachbarten Triggerimpulse 28 für zwei benachbarte Abtastwinkel des Senders vorgesehen sind. Dies bedeutet, dass mit dem in Fig. 7 dargestellten linken Triggerimpuls 28 das Aussenden des Laserimpulses für einen ersten Abtastwinkel getriggert wird, während mit dem rechten Triggerimpuls 28 das Aussenden des Laserimpulses für den benachbarten zweiten Abtastwinkel getriggert wird.. Zum Zeitpunkt T0 erfolgt somit das Aussenden eines Laserimpulses für einen ersten Abtastwinkel. Innerhalb eines ersten Zeitintervalls T1 erfolgt dann eine Nahbereichmessung, bei welcher die erste Schwelle 26 verwendet wird. Diese Schwelle 26 wird im ersten Zeitintervall T1 auf einen konstanten Schwellwert S1 eingestellt. Unmittelbar auf das erste Zeitintervall T1 folgt dann ein zweites Zeitintervall T2, in welchem eine Fernbereichsmessung erfolgt. Unmittelbar auf das zweite Zeitintervall T2 folgt ein drittes Zeitintervall T3, in welchem der Rauschpegel gemessen wird.

Zum Zeitpunkt T4 bzw. bei Ablauf des ersten Zeitintervalls T1 erfolgt ein Wechsel von der ersten Schwelle 26 auf die zweite Schwelle 27. Während die erste Schwelle 26 nicht mehr genutzt wird, wird die zweite Schwelle 27 für das Empfangssignal 11 verwendet. Dies kann beispielsweise derart realisiert werden, dass das Empfangssignal 11 einem zweiten Komparator zugeführt, welchem auch die zweite Schwelle 27 zugeführt wird. Alternativ kann bei ein und demselben Komparator von der ersten Schwelle 26 auf die zweite Schwelle 27 umgeschaltet werden. Die zweite Schwelle 27 wird also für die Fernbereichsmessung verwendet und auf einen konstanten Schwellwert S2 eingestellt, der geringer als der Schwellwert S1 ist.

Im ersten Zeitintervall T1 wird die Höhe des Empfangssignals 11 im ersten Zeitintervall T1 mit der ersten Schwelle 26 verglichen, während im zweiten Zeitintervall T2 die Höhe des

## Patentansprüche

1. Optoelektronische Detektionseinrichtung (7), insbesondere Laserscanner, für ein Kraftfahrzeug, mit einem optischen Sender (1, 3) zum Aussenden elektromagnetischer Strahlen (2, 9), mit einem Avalanche-Photodetektor (10) zum Empfangen von an einem Zielobjekt in einer Umgebung des Kraftfahrzeugs reflektierten Strahlen (2, 9) und zum Bereitstellen eines elektrischen Empfangssignals (11) abhängig von den empfangenen Strahlen (2, 9), mit einer Auswerteeinrichtung (12) zum Detektieren des Zielobjekts abhängig von dem elektrischen Empfangssignal (11), und mit einer Steuereinrichtung (17), die dazu ausgelegt ist, eine elektrische Biasspannung (BU) des Avalanche-Photodetektors (10) im Betrieb der Detektionseinrichtung (7) einzustellen, wobei die Detektionseinrichtung (7) eine Messeinrichtung zum Erfassen des Werts eines Rauschens (R) des elektrischen Empfangssignals (11) aufweist und die Steuereinrichtung (17) dazu ausgelegt ist, die Biasspannung (BU) des Avalanche-Photodetektors (10) in Abhängigkeit von dem Wert des Rauschens (R) einzustellen, **dadurch gekennzeichnet, dass** der Sender (1, 3) dazu ausgebildet ist, ein Sichtfeld (6) der Detektionseinrichtung (7) innerhalb eines Abtastwinkelbereichs (8) abzutasten und hierbei für eine Vielzahl von unterschiedlichen Abtastwinkeln innerhalb des Abtastwinkelbereichs (8) jeweils einen Sendestrahl (2, 9) auszusenden und die Steuereinrichtung (17) dazu ausgelegt ist, für zumindest zwei unterschiedliche Teilwinkelbereiche des Abtastwinkelbereichs (8) die Biasspannung (BU) jeweils individuell einzustellen.

2. Detektionseinrichtung (7) nach Anspruch 1,
**dadurch gekennzeichnet, dass**
die Steuereinrichtung (17) dazu ausgelegt ist, durch Einstellung der Biasspannung (BU) den Wert des Rauschens (R) auf einen vorgebbaren Sollwert (R_{SOLL}) zu regeln.

3. Detektionseinrichtung (7) nach Anspruch 1 oder 2,
**dadurch gekennzeichnet, dass**
die Auswerteeinrichtung (12) dazu ausgelegt ist, das elektrische Empfangssignal (11) mit einer vorgegebenen Schwelle (22, 26, 27) zu vergleichen und das Zielobjekt abhängig von diesem Vergleich zu detektieren, wobei die Steuereinrichtung (17) dazu ausgelegt ist, durch Einstellung der Biasspannung (BU) den Wert des Rauschens (R) auf einen Sollwert (R_{SOLL}) einzustellen, der geringer als die Schwelle (22, 26, 27) ist.

4. Detektionseinrichtung (7) nach Anspruch 3,
**dadurch gekennzeichnet, dass**
die Auswerteeinrichtung (12) dazu ausgelegt ist, innerhalb eines ersten Zeitintervalls (T1) nach Aussenden eines Strahls (2, 9) durch den Sender (1, 3) das elektrische Empfangssignal (11) mit einer für eine Nahbereichsmessung vorgesehenen ersten Schwelle (26) zu vergleichen und innerhalb eines auf das erste Zeitintervall (T1) folgenden zweiten Zeitintervalls (T2) das elektrische Empfangssignal (11) mit einer für eine Fernbereichsmessung vorgesehenen zweiten Schwelle (26) zu vergleichen.

5. Detektionseinrichtung (7) nach Anspruch 4,
**dadurch gekennzeichnet, dass**
die Steuereinrichtung (17) dazu ausgelegt ist, durch Einstellung der Biasspannung (BU) den Wert des Rauschens (R) auf einen Sollwert (R_{SOLL}) einzustellen, der geringer als die für die Fernbereichsmessung vorgesehene zweite Schwelle (27) ist.

6. Detektionseinrichtung (7) nach einem der Ansprüche 3 bis 5,
**dadurch gekennzeichnet, dass**
die Messeinrichtung dazu ausgelegt ist, den Wert des Rauschens (R) durch Absenken einer der Schwellen (22, 26, 27), insbesondere der ersten Schwelle (26), zu erfassen.

7. Detektionseinrichtung (7) nach einem der Ansprüche 4 bis 6,
**dadurch gekennzeichnet, dass**
die Messeinrichtung dazu ausgelegt ist, den Wert des Rauschens (R) innerhalb eines auf das zweite Zeitintervall (T2) folgenden dritten Zeitintervalls (T3) zu erfassen.

8. Detektionseinrichtung (7) nach einem der vorhergehenden Ansprüche,
**dadurch gekennzeichnet, dass**
die Messeinrichtung dazu ausgelegt ist, den Wert des Rauschens (R) für die zumindest zwei unterschiedlichen Teilwinkelbereiche individuell zu erfassen, und dass für die zumindest zwei unterschiedlichen Teilwinkelbereiche jeweils unterschiedliche Sollwerte (R_{SOLL}) für den jeweiligen Wert des Rauschens (R) individuell vorgebbar sind, wobei die Steuereinrichtung (17) dazu ausgelegt ist, durch individuelle Einstellung der Biasspannung (BU) in jedem Teilwinkelbereich den Wert des Rauschens (R) auf den jeweils zugeordneten Sollwert (R_{SOLL}) zu regeln.

9. Kraftfahrzeug mit einer Detektionseinrichtung (7) nach einem der vorhergehenden Ansprüche.

10. Verfahren zum Betreiben einer optoelektronischen Detektionseinrichtung (7), insbesondere eines Laserscanners, eines Kraftfahrzeugs, bei welchem mittels eines optischen Senders (1, 3) elektromagnetische Strahlen (2, 9) ausgesendet werden, mittels eines Avalanche-Photodetektors (10) an einem Zielobjekt in einer Umgebung des Kraftfahrzeugs reflektierte Strahlen (2, 9) empfangen werden und ein elektrisches Empfangssignal (11) abhängig von den empfangenen Strahlen (2, 9) bereitgestellt wird, mittels einer Auswerteeinrichtung (12) das Zielobjekt abhängig von dem elektrischen Empfangssignal (11) detektiert wird, und mittels einer Steuereinrichtung (17) eine elektrische Biasspannung (BU) des Avalanche-Photodetektors (10) im Betrieb der Detektionseinrichtung (7) eingestellt wird, wobei mittels einer Messeinrichtung der Wert eines Rauschens (R) des elektrischen Empfangssignals (11) erfasst wird und die Steuereinrichtung (17) die Biasspannung (BU) des Avalanche-Photodetektors (10) in Abhängigkeit von dem Wert des Rauschens (R) einstellt, **dadurch gekennzeichnet, dass** ein Sichtfeld (6) der Detektionseinrichtung (7) innerhalb eines Abtastwinkelbereichs (8) abgetastet wird und hierbei für eine Vielzahl von unterschiedlichen Abtastwinkeln innerhalb des Abtastwinkelbereichs (8) jeweils ein Sendestrahl (2, 9) ausgesendet wird und für zumindest zwei unterschiedliche Teilwinkelbereiche des Abtastwinkelbereichs (8) die Biasspannung (BU) jeweils individuell eingestellt wird.

## Claims

1. Optoelectronic detection device (7), in particular laser scanner, for a motor vehicle, comprising an optical emitter (1, 3) for emitting electromagnetic beams (2, 9), comprising an avalanche photodetector (10) for receiving beams (2, 9) reflected at a target object in an environment of the motor vehicle and for providing an electrical reception signal (11) depending on the received beams (2, 9), comprising an evaluation device (12) for detecting the target object depending on the electrical reception signal (11), and comprising a control device (17) designed to set an electrical bias voltage (BU) of the avalanche photodetector (10) during the operation of the detection device (7), wherein the detection device (7) comprises a measuring device for detecting the value of noise (R) of the electrical reception signal (11) and the control device (17) is designed to set the bias voltage (BU) of the avalanche photodetector (10) depending on the value of the noise (R), **characterized in that** the emitter (1, 3) is configured to scan a field of view (6) of the detection device (7) within a scanning angle range (8) and in this case to emit respectively an emission beam (2, 9) for a multiplicity of different scanning angles within the scanning angle range (8), and the control device (17) is designed to set the bias voltage (BU) individually in each case for at least two different angle subranges of the scanning angle range (8).

2. Detection device (7) according to Claim 1,
**characterized in that**
the control device (17) is designed to regulate the value of the noise (R) to a predefineable setpoint value (R_{SETPOINT}) by setting the bias voltage (BU).

3. Detection device (7) according to Claim 1 or 2,
**characterized in that**
the evaluation device (12) is designed to compare the electrical reception signal (11) with a predefineable threshold (22, 26, 27) and to detect the target object depending on this comparison, wherein the control device (17) is designed to set the value of the noise (R) to a setpoint value (R_{SETPOINT}) that is lower than the threshold (22, 26, 27) by setting the bias voltage (BU).

4. Detection device (7) according to Claim 3,
**characterized in that**
the evaluation device (12) is designed to compare the electrical reception signal (11) with a first threshold (26), which is provided for a short-range measurement, within a first time interval (T1) after the emission of a beam (2, 9) by the emitter (1, 3) and to compare the electrical reception signal (11) with a second threshold (26), which is provided for a long-range measurement, within a second time interval (T2) following the first time interval (T1).

5. Detection device (7) according to Claim 4,
**characterized in that**
the control device (17) is designed to set the value of the noise (R) to a setpoint value (R_{SETPOINT}) that is lower than the second threshold (27), which is provided for the long-range measurement, by setting the bias voltage (BU).

6. Detection device (7) according to any of Claims 3 to 5,
**characterized in that**
the measuring device is designed to detect the value of the noise (R) by reduction of one of the thresholds (22, 26, 27), in particular the first threshold (26).

7. Detection device (7) according to any of Claims 4 to 6,
**characterized in that**
the measuring device is designed to detect the value of the noise (R) within a third time interval (T3) following the second time interval (T2) .

8. Detection device (7) according to any of the preceding claims,
**characterized in that**
the measuring device is designed to individually detect the value of the noise (R) for the at least two different angle subranges, and **in that** for the at least two different angle subranges respectively different setpoint values (R_{SETPOINT}) are individually predefineable for the respective value of the noise (R), wherein the control device (17) is designed to regulate the value of the noise (R) to the respectively assigned setpoint value (R_{SETPOINT}) by individually setting the bias voltage (BU) in each angle subrange.

9. Motor vehicle comprising a detection device (7) according to any of the preceding claims.

10. Method for operating an optoelectronic detection device (7), in particular a laser scanner, of a motor vehicle, wherein electromagnetic beams (2, 9) are emitted by means of an optical emitter (1, 3), beams (2, 9) reflected at a target object in an environment of the motor vehicle are received and an electrical reception signal (11) is provided depending on the received beams (2, 9) by means of an avalanche photodetector (10), the target object is detected depending on the electrical reception signal (11) by means of an evaluation device (12), and an electrical bias voltage (BU) of the avalanche photodetector (10) is set during the operation of the detection device (7) by means of a control device (17), wherein the value of noise (R) of the electrical reception signal (11) is detected by means of a measuring device and the control device (17) sets the bias voltage (BU) of the avalanche photodetector (10) depending on the value of the noise (R), **characterized in that** a field of view (6) of the detection device (7) is scanned within a scanning angle range (8) and in this case an emission beam (2, 9) is respectively emitted for a multiplicity of different scanning angles within the scanning angle range (8) and the bias voltage (BU) is set individually in each case for at least two different angle subranges of the scanning angle range (8).

## Revendications

1. Dispositif de détection optoélectronique (7), en particulier un scanner laser, destiné à un véhicule automobile, comportant un émetteur optique (1, 3) destiné à émettre des faisceaux électromagnétiques (2, 9), un photodétecteur à avalanche (10) destiné à recevoir des faisceaux (2, 9) réfléchis par un objet cible dans un environnement du véhicule automobile et à fournir un signal de réception électrique (11) en fonction des faisceaux reçus (2, 9), comportant un dispositif d'évaluation (12) destiné à détecter l'objet cible en fonction du signal de réception électrique (11), et comportant un dispositif de commande (17) qui est conçu pour régler une tension de polarisation électrique (BU) du photodétecteur à avalanche (10) pendant le fonctionnement du dispositif de détection (7), dans lequel le dispositif de détection (7) comporte un dispositif de mesure destiné à détecter la valeur d'un bruit (R) du signal de réception électrique (11), et le dispositif de commande (17) est conçu pour régler la tension de polarisation (BU) du photodétecteur à avalanche (10) en fonction de la valeur du bruit (R),
**caractérisé en ce que** l'émetteur (1, 3) est conçu pour balayer un champ de vision (6) du dispositif de détection (7) à l'intérieur d'une plage angulaire de balayage (8) et pour ainsi émettre un faisceau d'émission respectif (2, 9) pour une pluralité d'angles de balayage différents à l'intérieur de la plage angulaire de balayage (8), et le dispositif de commande (17) est conçu pour régler individuellement la tension de polarisation (BU) pour au moins deux plages angulaires partielles différentes respectives de la plage angulaire de balayage (8).

2. Dispositif de détection (7) selon la revendication 1,
**caractérisé en ce que** le dispositif de commande (17) est conçu pour réguler la valeur du bruit (R) sur un point de consigne prédéfini (R_{SOLL}) en réglant la tension de polarisation (BU).

3. Dispositif de détection (7) selon la revendication 1 ou 2,
**caractérisé en ce que** le dispositif d'évaluation (12) est conçu pour comparer le signal de réception électrique (11) à un seuil prédéterminé (22, 26, 27) et pour détecter l'objet cible en fonction de ladite comparaison, dans lequel le dispositif de commande (17) est conçu pour régler la valeur du bruit (R) sur un point de consigne (R_{SOLL}) qui est inférieur au seuil (22, 26, 27) en ajustant la tension de polarisation (BU).

4. Dispositif de détection (7) selon la revendication 3,
**caractérisé en ce que** le dispositif d'évaluation (12) est conçu pour comparer le signal de réception électrique (11) à un premier seuil (26) prévu pour une mesure de courte portée, au cours d'un premier intervalle de temps (T1) faisant suite à l'émission d'un faisceau (2, 9) par l'émetteur (1, 3), et pour comparer le signal de réception électrique (11) à un deuxième seuil (26) prévu pour une mesure de grande portée, au cours d'un deuxième intervalle de temps (T2) faisant suite au premier intervalle de temps (T1).

5. Dispositif de détection (7) selon la revendication 4,
**caractérisé en ce que** le dispositif de commande (17) est conçu pour régler la valeur du bruit (R) sur un point de consigne (R_{SOLL}) qui est inférieur au deuxième seuil (27) prévu pour la mesure à grande portée en réglant la tension de polarisation (BU).

6. Dispositif de détection (7) selon l'une des revendications 3 à 5,
**caractérisé en ce que** le dispositif de mesure est conçu pour détecter la valeur du bruit (R) en abaissant l'un des seuils (22, 26, 27), en particulier le premier seuil (26).

7. Dispositif de détection (7) selon l'une des revendications 4 à 6,
**caractérisé en ce que** le dispositif de mesure est conçu pour détecter la valeur du bruit (R) au cours d'un troisième intervalle de temps (T3) faisant suite au deuxième intervalle de temps (T2).

8. Dispositif de détection (7) selon l'une des revendications précédentes,
**caractérisé en ce que** le dispositif de mesure est conçu pour détecter individuellement la valeur du bruit (R) pour les au moins deux plages angulaires partielles différentes, et **en ce que** des valeurs de consigne différentes (R_{SOLL}) respectives peuvent être prédéfinies individuellement pour la valeur du bruit (R) dans les au moins deux plages angulaires partielles différentes, dans lequel le dispositif de commande (17) est conçu pour réguler la valeur du bruit (R) sur le point de consigne associé respectif (R_{SOLL}) en réglant individuellement la tension de polarisation (BU) dans chaque plage angulaire partielle.

9. Véhicule automobile muni d'un dispositif de détection (7) selon l'une des revendications précédentes.

10. Procédé de mise en fonctionnement d'un dispositif de détection optoélectronique (7), en particulier un scanner laser, d'un véhicule automobile, dans lequel des faisceaux électromagnétiques (2, 9) sont émis au moyen d'un émetteur optique (1, 3), des faisceaux (2, 9) réfléchis par un photodétecteur à avalanche (10) sur un objet cible dans un environnement du véhicule sont reçus et un signal de réception électrique (11) est fourni en fonction des faisceaux reçus (2, 9), l'objet cible est détecté au moyen d'un dispositif d'évaluation (12) en fonction du signal de réception électrique (11), et une tension de polarisation électrique (BU) du photodétecteur à avalanche (10) est réglée au moyen d'un dispositif de commande (17) pendant le fonctionnement du dispositif de détection (7), dans lequel la valeur d'un bruit (R) du signal de réception électrique (11) est détectée au moyen d'un dispositif de mesure et le dispositif de commande (17) règle la tension de polarisation (BU) du photodétecteur à avalanche (10) en fonction de la valeur du bruit (R), **caractérisé en ce qu'**un champ de vision (6) du dispositif de détection (7) est balayé dans une plage angulaire de balayage (8) et **en ce qu'**un faisceau d'émission respectif (2, 9) est ainsi émis pour une pluralité d'angles de balayage différents dans la plage angulaire de balayage (8) et **en ce que** la tension de polarisation (BU) est réglée individuellement pour au moins deux plages angulaires partielles différentes respectives de la plage angulaire de balayage (8).
